# EUROPEAN PATENT APPLICATION

(11) **EP 2 306 333 A1**
(43) Date of publication of application: **06.04.2011**
(21) Application number: 09011387.9
(22) Date of filing: 04.09.2009
(51) Int. Cl.: G06F 17/30

(54) **Offline software library**

(71) Applicant: Jentro Technologies GmbH, 81671 München (DE)
(72) Inventor: Hempel, Erno, 81479 München (DE); Zenger, Christoph, 85540 Haar (DE); Blei, Dominik, 91673 München (DE)
(74) Representative: Müller-Boré & Partner Patentanwälte

(57) **Abstract**

The present description refers in particular to a computer-implemented method, computer program product and computer system for checking updates of requested data when performing a data request across a network. The computer-implemented method may comprise:
- providing a database specifying a plurality of items each of which having at least one category and additional content being assigned thereto;
- receiving a search request;
- identifying one or more tokens included in the search request;
- comparing at least one identified token with a plurality of categories defined in the database;
- mapping the at least one identified token to at least one category, if the at least one identified token matches the at least one category;
- classifying the at least one identified token as a full text search token for comparison to the additional content, if the token does not match any category; and
- determining a category search result identifying items having the at least one category assigned thereto in the database, if the identified token matches the at least one category.

## Description

### Technical Field

The description is directed generally to searching data in databases, particularly to a computer-implemented method, a system, and a computer program product for searching data, and more particularly to optimized searching that is advantageously applicable to offline databases.

### Background

Searching for points of interest (POI) via electronic devices, in particular electronic mobile devices, becomes more and more popular. Examples of said searches may be to determine a nearest gas station or another point of interest (POI) such as a specific restaurant, hotel, shop, airport, train station, public buildings etc.. In other words, searching for POI means to conduct local searches or geographical searches for places or persons a person wants to find.

Furthermore, the users' demand to receive additional information, such as opening hours, payment methods or prices about points of interests, is also increasing. Also, there is a demand to reduce data retrieving time and/or response times, in order to receive requested information by a user as fast as possible.

To be able to receive information by conducting searches for POI, wireless online communication may be used. Wireless online communication may be implemented by distributed client-server architectures. In order to establish said online communication between a client (e.g. a mobile device) and at least one server, the mobile device has to register and/or to connect to a wireless network prior to perform any data transmission over the network such as TCP/IP transmission. Connecting to a wireless network may be realized by use of a connection protocol such as HTTP(S).

Accordingly, there is a need to provide methods and systems that provide search results and/or additional information about POI in response to a search request in an efficient way.

### Summary

In one general aspect, a computer-implemented method for searching data (e.g. points of interest) is provided. The method may comprise:
- providing a database specifying a plurality of items (data items), such as points of interest, each of which having at least one category and additional content being assigned thereto;
- receiving a search request;
- identifying one or more tokens included in the search request;
- comparing at least one identified token with a plurality of categories defined in the database to determine whether the at least one identified token matches at least one of the categories defined in the database;
- mapping the at least one identified token to at least one category, if the at least one identified token matches the at least one category;
- classifying the at least one identified token as a full text search token for comparison to the additional content, if the token does not match any category; and
- determining a category search result identifying items having the at least one category assigned thereto in the database, if the identified token matches the at least one category.

The computer-implemented method may be used for searching POI by using one or more databases.

POI may be provided by a data provider. A data provider may also be someone, who buys and/or provides raw data and/or aggregates and compiles data received from a directory provider or a provider of POI data. A data provider may be a provider of any kind of directories and/or directory services.

The search method can be applied on any kind of electronic device, such as personal computers, network computers or computer systems as well as small electronic devices. A small electronic device may be a wireless device and/or mobile device, such as a mobile phone, a smart phone, a laptop, a mobile device for navigation, a handheld, a mobile internet device (MID), netbook, nettop and/or a PDA.

An advantage of the above method is that even in an offline environment the present method can be applied particularly efficient. Since, it is possible to execute search requests on or from an electronic devices, in particular small devices, which can temporarily or permanent not be connected to a remote server, because of no or bad reception of connecting signals. In cases, where wireless communication between a client (e.g. a mobile device) and a server is relatively slow, expensive (regarding time and costs), not very effective and unreliable, or also, when HTTP has a large overhead regarding headers, etc. compared to data load transmitted, the method can efficiently be still applied.

For example, the method may be applied in general in an online environment, so that updates and/or other data can be uploaded or used, respectively. However, in cases, where no network connection or a bad network connection is present or costs, such as roaming costs, for using a network would be expensive, then the method can be applied in an offline environment.

Furthermore, it is not necessary that as in several applications, once a connection between a client and a server is established, the connection remains open until a communication is terminated. Said communication may comprise data requests, downloads of services and/or data retrieved by requests and responses exchanged between a client and a server. In view of security aspects and availability of requested information, it is advantageously to have a possibility to search for POI in an offline application.

Additionally, the method is optimized such that it can be executed by a system with restricted resources. Even, when the number of data and available data systems may be restricted by limited resources of the electronic device, an efficient search can be conducted. Exemplary, the method can be executed on small electronic devices, which may have limited resources with respect to the CPU, available memory such as a main memory, flash memory space, hard disc space, Input/Output speed (lO speed) and/or the size of a display.

Accordingly, the computer-implemented method may be used for searching for points of interest (POI) stored on one or more offline databases on a small device.

It is to be understood that offline may describe a condition of using a computer system and/or a computer-implemented method, if not using a connection to the internet, any online service, internal network and/or computer network. Furthermore, it is to understand that an offline database may include data stored on memories or a data storage in general, such as hard disks, disks, tapes, memory chips, which are used as data library, and only used in a local manner. Also, an offline database may be implemented together with an offline library or an offline software library, respectively.

An offline database, such as an offline software library, may include an application programming interface (API) in order to integrate or provide functions for searching and/or to implement or provide a user guidance and/or a user interface.

Points of interest, which can be searched, may be specific locations, such as an embassy in a city, a restaurant, a bookshop, a museum, a school or a lawyers' office. Moreover points of interest may also be general locations, such as gas stations located around a place or on a travelling route. When searching for POI, a local search may be executed. For example, a search for a POI may be a proximity search. In other words, exemplary the user of the present method is standing in a street and tries to find the nearest hotel by using the present method, then hotels are POI, which the user requested to be reported.

In order to be able to find POI, a database has to be provided, wherein a plurality of items (data items) is specified. An item may be a specific POI and/or a group of POI. Each item may have at least one category and additional content being assigned thereto. A category defines or classifies a POI. For example, a POI, which is a Holiday Inn hotel, may be in the category of POI "hotels". Also, a motel may be a POI, which is categorized in the category "hotels". Furthermore, a POI, which is a bed and breakfast place, may also be categorized as "hotels".

Through assigning at least one category to the item it is possible to mark POI of the same and/or similar kind, so that it is possible, if required to handle such identically or similarly marked POI in a specific manner.

Additional content, which may be assigned to an item, may be information about the POI, such as a name or title, an address, email address, website URL, a telephone number, opening hours, descriptive text and/or geographical location of the POI. The additional content may further include one or more keywords to additionally characterise an POI.

When searching for POI, a user may enter a search request. The search request may be received by a computer system via a user interface. Receiving may also include capturing a search request. A search request may be a search string or a search term, respectively. The search request may comprise a single word and/or character and/or an arbitrary set of words and/or characters. For example, the search request may contain any Unicode character such as UTF-8 characters, including common delimiters like space or comma. In other words, it is preferably not necessary to observe any rule by entering a search request. In case the search request is empty, no search will be performed.

The entered search request may be processed, so that one or more tokens included in the search request may be identified. By identifying one or more tokens, the search request may be tokenized, so that the set of words or characters included in the search request may be separated into tokens.

In computer science, a token may be used by lexical analysis. During a process of converting a sequence of characters, the sequence of characters may be converted into a sequence of tokens. Programs performing such a lexical analysis are called lexical analyzers or lexers. A lexer may be organized as separate scanner and tokenizer functions, though the boundaries may not be clearly defined, wherein boundaries may be defined by delimiters. Furthermore, a specification of a programming language may include a set of rules, which may be expressed syntactically, specifying a set of possible character sequences that are able to form a token or lexeme, respectively, wherein for example, a whitespace characters may be ignored during lexical analysis.

In other words, a token may be a categorized block of text, wherein the block of text corresponding to the token may be the lexeme. A lexical analyzer may divide a sequence of characters into tokens (tokenization) and categorizes or defining these tokens according to a function, which provides the tokens with a particular meaning for purposes of further processing.

A token may not necessarily comprise a particular format. A token may be included in a structured text. In other words, a token may be a demarcated and/or possibly classifyed section of a string of input characters or a search term. Identified tokens may be further processed, by applying a sub-task, such as parsing. For example, a sentence may be split into word tokens.

After having the identified tokens, at least one of the identified token is compared with a plurality of categories defined in the database. Wherein comparing may include searching for categories, which may match a respective identified token. Also, comparing may comprise filtering the database content for items or categories, respectively, which may match to the identified tokens. Preferably, all tokens identified in the received search request are successively or simultaneously compared with the at least one category, or even with all categories defined in the database, such that it is determined for each identified token whether one of the categories defined in the databases matches the respective token.

If a token matches at least one category, then this token is mapped to the at least one category. For example, if an identified token is "hotel" and a category "hotels" is defined, then the token "hotel" is mapped to the category "hotels". In other words, mapping tries to match single tokens to an appropriate category.

However, it may also be possible to map multiple tokens at once to categories. For example, the tokens "inn" and "holiday" may not match any category, if separately compared with a plurality of categories. However, if the tokens "inn" and "holiday" are concatenated, a combined token "inn holiday" or "holiday inn" may be matched to the category "hotels". Furthermore, the combined token "inn holiday" or "holiday inn" may be matched to a category "holiday inn".

Preferably, an identified token may match a respective category, if it meets a category definition. A category definition may include a collection of keywords and/or descriptions. Also, a category definition may include a list of synonyms and/or acronyms and/or abbreviations, which may be used as category synonyms. Exemplary, in case POI is tagged with a category named "plumber', if the search request includes any of the words or tokens "tinner", "fitter", "pipelayer", then such tokens can be mapped to the category "plumber". Moreover, it may be the case that, directory services have own category names or identifications. It may be used a mapping table for categories, for example if a directory service has the category name "hotel or motel", the mapping table maps all following keywords: hotel, hotels, motel and motels to the category "hotel or motel".

Further preferably, an identified token may match a respective category, also in the case that the identified token comprises another language than the respective category, since it may occur that data providers only support their local language. For example, the German directory provider "DasÖrtliche" may only support German search terms, i.e. category names. In this case the respective category definition may provide a translation of this category.

Without this feature, users searching for a pharmacy, for example, would have to enter the German word for pharmacy, "Apotheke", to get expected results. With this smart feature, users can use the English word "pharmacy" or the equivalent word in any other supported language.

By identifying and/or comparing and/or mapping tokens is it not necessary that a token is identical spelled or written to a respective category. Also, it is possible to define a plurality of tokens, which may be eventually able to be mapped to at least a respective category. In other words, it is possible to relate tokens to categories, wherein the respective tokens have characteristics in accordance with definitions of the respective categories.

Furthermore, the method may include receiving a search request, wherein an entering of a search request in a user interface may be supported by a type ahead functionality. In order to support quick search term entry, an offline software library may include an API, which supports a type ahead functionality. Exemplary, a directory provider specific list for a "type ahead" function may be supported by an database including an API. For example, when entering "res" for "restaurant" a list with "rest area", "restaurant", "public restrooms" or "ski resorts" is offered.

In case a token does not match any category, then the at least one identified token is classified and used as a full text search token, which may be searchable by use of the additional content. The additional content may include information about the respective POI. In other words, tokens may be defined as full text search tokens, if no respective category can be extracted or found, respectively.

A category search result identifying items having the at least one category assigned thereto in the database may be determined, based on the tokens of the search request, which can be mapped to a respective category. The category search result may be a preliminary result list, where only items are listed that have said respective category assigned thereto. Preferably, the category search result may be a preliminary result list, where all items are listed that have said respective category assigned thereto. Furthermore, the category search result may be a preliminary result list, where all items are listed that have only said respective category assigned thereto.

Furthermore, after a category search result has been determined and/or at least one full text search token has been defined, it may be determined whether a full text search or a category search has to be executed. Based on this determination a corresponding search may be performed, wherein the category search preferable comprises the mapping of the at least one identified token to at least one category and the determination of the category search result which identifies all items from the database that have the at least one category assigned thereto in the database. In a preferred embodiment, before a decision on the type of search is made, all of the identified tokens are classified as either a category token or a full text search token, respectively, and if at least one of the identified token is classified as a category token, i.e. if at least one of the identified tokens matches at least one category defined in the database, then a category search is executed.

In a preferred embodiment, the method may include providing an interface including a single free text field for a user to enter the search request. Entering a search request may be possible via a keyboard, a remote control, a touch screen or a onscreen keyboard. However, it may also be possible to use a voice input unit, so that a search request may be received by using a headset, a microphone or similar devices. In any case, the invention preferably provides an efficient automated structuring of the received search request, by automatically identifying and classifying the one or more tokens from the received search request. Therefore, the user is not required to enter a search request in a predetermined order. Accordingly, a search request including a token, which matches a category, and a token, which is classified as full text search token, need not to have a specific order in the search request. Hence, a search result is not dependent from an order of search terms being tokens, which the user chooses to enter as search request. Consequently, the user is able to enter a search request including full text search tokens and tokens matching a category in an arbitrary order in a single free text field. This leads to an improved man/machine interaction, since the application on the user's side is simplified and, therefore, the time the user needs for searching data is reduced.

In a further preferred embodiment, the method may comprise identifying the at least one token, whereby including tokenising of the search request into one or more tokens by using delimiters, when the search request includes more than one term. The delimiters may be commonly used delimiters, such as space, comma or semicolon. However, also special delimiters, which may be defined by a user, a provider of the method or any other entity may be applied.

In computer science, tokenizing may be used for lexical analysis, which is a process of converting a sequence of characters into a sequence of tokens. Programs performing such a lexical analysis are called lexical analyzers or lexers. A lexer may be organized as separate scanner and tokenizer functions, though the boundaries may not be clearly defined, wherein boundaries may be defined by delimiters. Furthermore, a specification of a programming language may include a set of rules, which may be expressed syntactically, specifying a set of possible character sequences that are able to form a token or lexeme, respectively, wherein for example, a whitespace characters may be ignored during lexical analysis.

In other words, a token may be a categorized block of text, wherein the block of text corresponding to the token may be the lexeme. A lexical analyzer may divide a sequence of characters into tokens (tokenization) and categorizes or defining these tokens according to a function, which provides the tokens with a particular meaning for purposes of further processing.

A token may not necessarily comprise a particular format. Also, a token may be included in a structured text. In other words, tokenization may be a process of demarcating and possibly classifying sections of a string of input characters or a search request. Identified tokens may be further processed, by applying a sub-task, such as parsing. A process of tokenization may also be used to split a sentence into word tokens.

In a further preferred embodiment, identifying the at least one token may include adding the one or more identified token to a token list.

By tokenizing the search request, the identified tokens may be added to a list, which may be a token list. The listed tokens may then be available during the whole method to be able to be further processed.

There may be at least two different kinds of lists used. The first list may be the token list. The second list may be the category search list. Exemplary, tokens matching a category can be removed from the token list and mapping information relating to the respective category may be added to the category search list. The tokens remaining in the token list may then be used as full text search tokens. Therefore, the first list or token list, respectively, may be a full text search list.

It may also be that three different kinds of lists are used. The first list may be the token list. The second list may be the category search list. Tokens related to a category may be removed from the token list. The third list may be a full text search list. Tokens, which are classified or defined as full text tokens may be removed from the token list and added to the full text search list. Consequently, a search may be executed, when the first list is empty, since all tokens listed have been removed to be added to the second list or the third list, respectively.

In a further preferred embodiment, mapping may include adding respective mapping information that identifies the respective category to a category search list. Also in a preferred embodiment, the method may comprise removing the token matching the at least one category from the token list.

In other words, tokens, which are related to an item may be deleted or removed, respectively, from the token list, which lists all identified tokens after tokenizing. The identified items may include a category identification, which may be a number or a name. The category identification may also be any bijective symbol or combination of characters. Such category identification may be added to the category search list, so that a reference to the further information included in the respective item is possible. Hence, it is not necessary to add the whole information related to an item to the category search list. These category identification may be the mapping information that identifies categories.

In a further preferred embodiment, comparing may include
-- concatenating at least two identified tokens to a combined token, and
-- comparing the at least one combined token with a plurality of categories defined in the database; and
wherein mapping includes mapping the at least one combined token to at least one category, if the at least one combined token matches the at least one category; and wherein
each of the at least two identified tokens of the combined token is classified and used as full text search token to be searchable by use of the additional content, if the combined token does not match any category.

In other words, mapping may include mapping multiple identified tokens at once to a single category, if the multiple identified tokens match this single category. Further preferred, the method includes additionally adding respective mapping information that identifies the respective category to a category search list.

Furthermore, if more than one identified token match a respective category, only a single mapping information is added to the category search list. Therefore, the category search list may comprise a minimum of entries.

In a further preferred embodiment, mapping may include adding first and second mapping information to a category search list, wherein the first mapping information identify a first category and the second mapping information identify a second category. Preferably, determining the category search result comprises
determining an intermediate category search result identifying items having the first category assigned thereto in the database and
determining the category search result identifying items identified in the intermediate category result list and having the second category assigned thereto in the database.

In other words, the first mapping information corresponds with a first category identification and the second mapping information corresponds with a second category identification. Furthermore, the first mapping information may be a first entry in the category search list and the second mapping information may be a subsequent entry in the category search list. The determined intermediate category search result may include search results (i.e. items) related to the first category identification and, hence, to the first entry in the category search list. In a next step, the intermediate category search result may be compared with the subsequent entries in the category search list. Items listed in the intermediate category search result comprising additionally the subsequent mapping information may be determined to be an item of the category search result. In other words, items including at least two or even all categories listed in the category search list may be included in the category search result.

In a further preferred embodiment, the method may comprise determining a full text search result identifying items having additional content assigned thereto in the database, such that the additional content matches the full text search token. By determining a full text search result, the matching may include a search for keywords included in the additional content. Also, matching may include comparing full text search tokens with tokens included in the additional content. Under certain conditions it may be that the whole content of the database may be searchable and, therefore, by executing a full text search in the whole database may be searched. Preferably, a full text search may be executed, in cases where category search list does not include any mapping information. Also preferably, if the category search list includes at least one entry, then a category search may be executed first. Exemplary, the search request includes several tokens, wherein one token has been mapped to a respective category and, consequently, the category search list includes one entry. Additionally, the remaining identified tokens may have been determined to be full text search tokens. In this case, a category search may be executed first, and then a full text search may be executed additionally, if necessary, based on the category search result determined by the category search.

Furthermore, there may be cases, where an intermediate category search result has been determined, however the items identified in the intermediate category search result do not comprise the subsequent mapping information listed in the category search list. In these cases, based on items identified by the intermediate category search result a full text search may be executed.

Consequently, a combination of a category search and a full text search may be possible.

In other words, the method may comprise applying a search result filter to filter each remaining mapping information in the category search list, when a search has been performed not for all entries listed in the category search list, and selecting search results from the search, if the individual search results match the respective categories left in the category search list and/or applying a search result filter to filter each remaining term in the full text search list, when a full text search has been performed not for all terms listed in the full text search list, and selecting search results from the full text search, if the individual search results match the respective full text search term in the full text search list. As mentioned above a full text search may be based on the items identified by the intermediate category search result.

Further preferably, the method may include providing an alternative token, if a token including a misspelling, based on a fuzzy logic. Preferably, alternative tokens may be reported to a user, so that the user may be able to select one or more alternatives. Furthermore, in some cases a token including a misspelling may be automatically corrected. In other words, providing an alternative token may include correcting or adapting of the respective token. Also preferably, providing an alternative token may include providing a token for a phonetically spelled token.

For example, a user may enter a search request by using phonetically spelling of words. For phonetically spelled search terms or words, respectively, included in the search request respective alternative tokens may be reported to a user. Also, if a user enters a search request, it may be possible that the search request includes terms, which are phonetically similar and/or phonetically identical to the user actually intended to search for, then the user may be provided with one or more alternative search terms. In the case of phonetically identical search terms, the user may be provided with a definition of the provided alternative search term or an additional description in view of the denotation of the alternative search term, respectively. Hence, a user may be enabled to decide, for which alternative search term he wants to execute a search.

Therefore, a similarity search may be executed, so that a search result may be provided and a search application does not respond in this case with "no results found". There may be applications, which, for example, in most cases responds with results, even if the user has misspelled the search term(s). However, by small and/or offline devices, such as a PND, which has limited display capabilities, it may be advantageous to provide the user with alternative tokens and/or provide the user with an option, whether to report results for the search request including misspellings or correcting the search request. Therefore, an API, which suggests in this case other search term(s), may be provided.

Furthermore, the API may also consider, whether an alternative token or other search term(s) may lead to a search result. The number of search results, which may be received by entering a search request and/or using an alternative token may be displayed to a user. An order of search results may depend on a relevance, which may exemplary be determined by a user or a data provider. It may also be possible that a primary search result related to an alternative token or search term(s), respectively, is reported, if an alternative token leads to a search result including at least a single entry.

Further preferably, tokens may be processed even if including an alternate spelling. Preferably, a search request may be entered in an arbitrary manner, wherein the processing of the tokens may not depend on an order of tokens received. Furthermore, a search request may also be processed by being case insensitive.

In a further preferred embodiment, the method may comprise
providing geographical information assigned to each item;
defining a search area;
wherein determining a category search result and/or determining a full text search result is performed dependent on the defined search area, so that each of the identified items has geographical information assigned thereto, which define a respective geographical position within the search area.

Preferably, provided geographical information assigned to each item may be specified together with the item in the database. However, it may also be possible that the geographical information is provided in another database than the items. Geographical information may be provided from a different device than the device the database of the items is provided.

Defining the search area may also comprise determining a geographical starting position. The starting position may be a current position of the user or a position the user defines. Defining the search area may also be related to the geographical starting position. Defining the search area may also include defining a search distance based on the geographical starting position. The search area may include a search region, which may be circular around the a geographical starting position.

Exemplary, the search area may be a city or a district of a city. The search area may also be a travelling route of a user, wherein the travelling route has a starting position and a destination position. The search area may be a specific region determined by the user. The search area may be a circular area around a current position of the user, e.g. a circular area having a diameter of 50 kilometres.

The respective geographical position of the identified items within the search area may represent the respective locations of respective POI within the search area.

In a preferred embodiment, determining a category search result and/or determining a full text search result is performed dependent on the defined search distance, so that each of the identified items has geographical information assigned thereto, which define a respective position not farther from the geographical starting position than the defined search distance.

Further preferred, one or more search results may be provided, wherein at least one search result is based on geographical information of the user and/or at least one identified token.

Preferably, based on the categories listed in the category search list a search distance may be determined. The specific search distance resulting from a received search request may depend on several conditions.

Exemplary, the specific search distance may be a bee line. Furthermore, the specific search distance may depend on a real distance, which a user would have to cover to reach a POI. Moreover, the specific search distance may be determined by considering a travelling route to the POI as well as a bee line. Also, it may be possible to consider a deviation or a go off a user's travelling route to a destination e.g. other than a POI, by determining a specific search distance.

In cases, where more than one category is listed in the category search list the category having the largest search area in comparison with all categories listed may set the search area. Furthermore, it may also be that the category having the smallest search area in comparison with all categories listed may set the search area. Also, depending on one or more categories a search area may be defined.

A specific category may have a specific search area and/or search distance assigned. In other words a category may have a default search radius. There may be categories having the same search area or search distance assigned, respectively. There may be categories having default search radii differing from each other. Also, the search area of a category may depend on the defined starting position. If the defined geographical starting position lies in a metropolis or any other dense populated area, the search area assigned to a category may be smaller in comparison with the search area of the same category in a rural region or sparsely populated area and/or areas having a poor infrastructure.

Exemplary, a category "restaurant" may have a search distance of 10 km. Also, a category "hotels" may also have a search distance of 10 km. A category "airport" may have a search distance of 50 km assigned to the category "airport". Further exemplary, the category "hotels" may have a search distance of 30 km, if the geographical starting position is in an very sparsely populated area.

In a further preferred embodiment, the method may comprise
receiving a user input for requesting a continued search;
defining an enlarged search area; and
determining an enlarged category search result and/or determining an enlarged full text search result dependent on the defined enlarged search area, so that each of the identified items has geographical information assigned thereto, which define a respective geographical position within the enlarged search area.

Preferably, the defined enlarged search area may include the search area or in other words the previous defined search area. Also, the enlarged category search result may include the category search result as well as the enlarged full text search result may include the full text search result. Enlarging the defined search area may take place, if a user requests determining a further category search result, wherein determining a category search result and/or determining a full text search result is performed dependent on the search area, which may be a primary search area.

The category search result may be a search result received, when the search area defined by a category is used, wherein the category search result may be a final search result, if the user is able to find the favoured POI within the category search result and does not continue the search by enlarging the search area to a enlarged search area.

In a further preferred embodiment, determining a category search result may comprise
defining a local search region within the search area; and
determining a preliminary category search result identifying items having the at least one category assigned thereto in the database and having geographical information assigned thereto, which define a geographical position within the local search region; and/or
wherein determining a full text search result comprises
defining a local search region within the search area; and
determining a preliminary full text search result identifying items having additional content assigned thereto in the database, such that the additional content matches the full text search token, and having geographical information assigned thereto, which define a geographical position within the local search region.

Defining a local search region may be carried out step by step and/or continuously in a successive manner within the search area. Further preferably, a geographical start position may be defined and the local search region includes the geographical start position.

In other words, determining a search result may include successively adding items to the category search result and/or the full text search result including geographical information within the first local search region and further comprising:
increasing a further local search region, which is greater than the first local search region; and
successively adding items to the category search result and/or the full text search result including geographical information within the further local search region.

Preferably, search results or POI, respectively, which are closer to the geographical starting position, are determined before search results, which are farther from the geographical starting position. Therefore, the search results may be reported or added to a search result list while a respective search is still executed, so that the search result list may include search result having an order with increasing distances from geographical search position. Consequently, search results namely POI which are closer to the geographical starting position are immediately reported and reported preceding in view of POI having a greater distance to the geographical starting position.

In other words, searching for search results or points of interest comprises a priority queue, wherein points of interest are ordered by their distance from the geographical starting position as search center. Searching for points of interest in at least one enlarged search area which may tangent to the search area and/or may be in the neighbourhood of the search area. If the user requests more search results for points of interest, than POI within the enlarged search area my be provided.

Preferably, the method includes
providing a map including points of interest, wherein each point of interest is related to a region including coordinate data, which may be longitude data and latitude data,
associating the geographical information of the user with the map, wherein using the geographical information of the user for defining a geographical starting position as search center on the map; and
searching for points of interest in a specific area including at least one region dependent on the geographical information of the user.
In a further preferred embodiment, the method includes
defining the search area and/or the enlarged search area depend on the at least one category, which the at least one token matches.

In other words, defining the search area includes retrieving an assigned search area from the database depending on the at least category, which the at least one token matches.

In a further preferred embodiment, the method includes
providing a primary category matching list and a secondary category matching list;
comparing the at least on identified token with a plurality of categories includes
comparing the at least on identified token with a plurality of categories defined in the primary category matching list, and
comparing the at least on identified token with a plurality of categories defined in the secondary category matching list, if the identified token does not match at least one category of the primary category matching list.

The primary category matching list and the secondary category matching list may be provided in the database. Also, the primary category matching list and the secondary category matching list may be provided in a database different from the database specifying the plurality of items, wherein the primary and the secondary category matching lists may be provided in the same database or in different databases from each other.

Further preferably, the method may include comparing the at least on identified token with a plurality of categories defined in the secondary category matching list, if the identified token does not match at least one category of the primary category matching list. The secondary category matching list may include categories special to a data provider.

Preferably, the primary category matching list may include categories, which are more often mapped to an identified token, therefore, these categories may be more popular than other categories, wherein the secondary category matching list may include categories, which may more seldom mapped to an identified token.

Also, the primary category matching list and/or the secondary category matching list may include categories defined by a user as user categories. Preferably, a user may define user categories only in either of the primary or secondary category matching list. Furthermore, user categories may be marked to be distinguishable from categories not defined by the user, such as categories defined by data provider. It may also be defined, that either the primary category matching list or the secondary category matching list does exclusively include user categories.

Data provider may be generally a provider of yellow pages and/or white pages, such as DasÖrtliche, which is provided for Germany or Yell, which is provided for the United Kingdom. A data provider may also someone, who buys raw data and/or aggregates and compiles data received from directory provider. A data provider may be a provider of any kind of directories and/or directory services.

Also, if white pages are provided, it may be possible to relate the data of the white pages to a particular category, such a category "residentials" or "persons". However, it may be also possible to relate only a subset of white page data to respective categories. For example, data of private individuals may be categorised as "private directory". A user may be able to relate data of the white pages, which are interesting for him in view of business activity to a category "business partner". Also, it may be possible that data of the white pages are not categorized at all.

Furthermore, it may also be possible that more than two category matching lists are provided. For example, for each data provider a respective category matching list may be provided.

According to a further aspect, a computer system is provided. The computer system having at least one processor comprising:
- at least one memory for providing a database specifying/defining a plurality of items each of which having at least one category and additional content being assigned thereto;
- at least one user interface for receiving a search request;
- a identification module for identifying one or more tokens included in the search request;
- a comparator for comparing at least one identified token with a plurality of categories defined in the database;
- a mapping module for mapping the at least one identified token to at least one category, if the at least one identified token matches the at least one category; wherein
   the at least one identified token is used as a full text search token to be searchable by use of the additional content, if the token does not match any category;
- an evaluation module for determining a category search result identifying items having the at least one category assigned thereto in the database, if the identified token matches the at least one category.

Furthermore, the computer system may comprise at least one search engine for executing a full text search and/or a category search and performing the determined search.

The computer system may further comprise at least one search engine for executing a full text search and/or a category search and performing the determined search. Furthermore, the computer system may be such that the method as described may be executed. In particular, the computer system may be configured to execute one or more of the steps of the method described above.

According to a further aspect, a computer program product is provided. The computer program product comprising computer readable instructions, which when loaded into a memory of a data storage system cause at least one processor of the data storage system to execute one or more steps of the above described method. Details of one or more implementations are set forth in the accompanying exemplary drawings and exemplary description below. Other features will be apparent from the description and the drawings, and from the claims.

### Brief Description of the Drawings

Figure 1 shows an exemplary computer-implemented method to execute searches.
Figure 2 shows an exemplary computer-implemented method for matching categories.
Figures 3 to 6 show application examples particularly in the form of screen-shots of an exemplary computer-implemented method on an electronic device.
Figure 7 shows an exemplary computer (network) system.

### Detailed Description

In the following text, a detailed description of examples and/or example implementations will be given with reference to the drawings. It should be understood that various modifications to the examples may be made. In particular, elements of one example may be combined and used in other examples to form new examples.

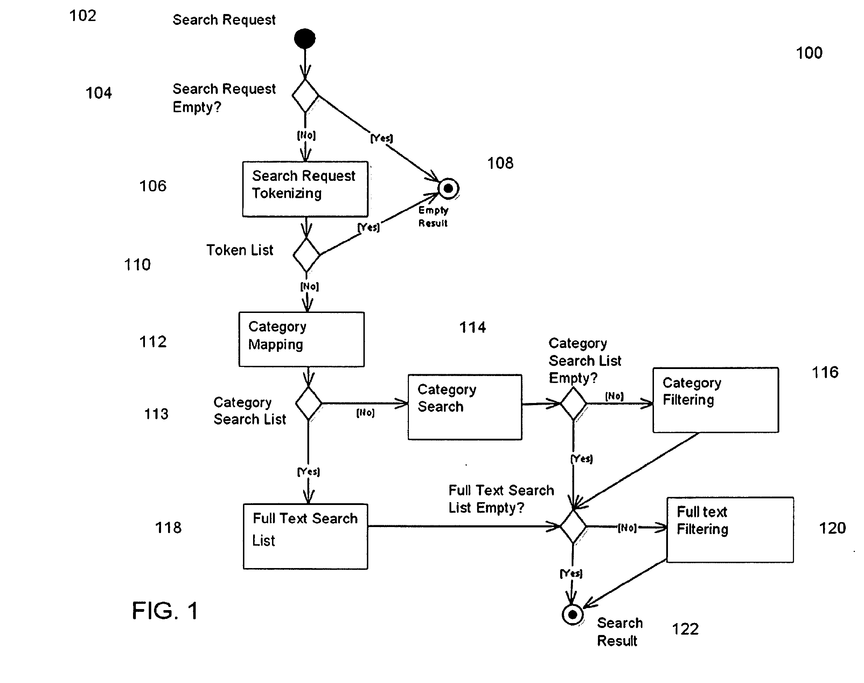

**Figure 1** shows an exemplary flow diagram of a computer-implemented method 100, which may provide results as search results 122, if a search term 102, which may be a search request submitted by a user, has been received.

The search term or search request may be a set of characters. The set of characters may include a set of words and/or one or more syllables and/or acronyms and/or abbreviations and/or numbers. The set of characters may also include symbols, such as comma, semicolon, colon, or any other punctuation marks and/or space. Therefore, the search request may contain any UTF-8 characters, including common delimiters like space or comma. Furthermore, the search request may include delimiters, which may be particularly defined.

Also, the search request may be submitted without considering, whether a word should be written with a capital letter, since the implementation may be such that it is not case sensitivity. However, whether a case sensitivity may be activated or not may depend on settings, such as made by a user and/or a provider. Moreover, it may be possible that only particular search terms or search requests, respectively, have to be entered by considering a case sensitivity.

Furthermore, it may be determined that a character like e.g. an apostrophe character such as" " as represented by Unicode U+0027, U+0060 and U+00B4 may not be considered as a delimiter, it may be ignored by searching for results. For example "McDonald's" may also be found as search result by entering "McDonalds", "mcdonalds" or "mcdonald".

By entering a search request, a user has also not to take into account special spellings of letters in different languages, as it may be the case in view of particular German, Danish and Swedish letters. When entering a search request an alternate spelling substitution (for example "ä" or as "ae", or "ø" as "oe") may be used or the similar letters (for example "ä" or as "a", or "ø" as "o") may be used. The same holds for French letters like "é" as "e" or for the Czech/Slovakian letter (consonant combination) "dź" (Unicode U+01 C6) as "dz".

The search request may further include phonetic spelling of words and/or misspelling of words. Therefore, a user may enter a search request by using phonetical spelling of words. For phonetically spelled search terms or words, respectively, included in the search request respective alternative tokens may be reported to a user.

Also, if a user enters a search request, it may be possible that the search request includes terms, which are phonetically similar and/or phonetically identical to the terms the user actually intended to search for, then the user may be provided with one or more alternative search terms. In the case of phonetically identical search terms, the user may be provided with a definition of the provided alternative search term or an additional description of the alternative search term, respectively.

The search request may also be an arbitrary string. Therefore, when a user prepares a search request, the user has not to consider any rules or order, which may influence a processing of the search request, and consequently, a possible search result. For example, when searching for a hotel, namely holiday inn, the user is free to submit "inn hotel holiday" as search request. Therefore, the search request may be submitted by entering it in one free text field. Accordingly, it is also not necessary to have more text fields, such as two text fields, e.g. for a category and a business name.

After a search request 102 has been received, it may be checked or determined whether the search request 102 includes characters. If a search request is empty, no search can be performed, and an empty result 108 is returned.

In case the search request 102 includes characters, the search request is tokenised. In other words, tokens included in the search request can be identified by search request tokenising 106. The identified tokens may be added to a token list.

If a search request 102 solely includes delimiters, no tokens can be identified and the token list 110 is empty, hence, an empty result 108 is returned, since no search can be performed.

In an example, the search request tokenising 106 may identify the tokens "inn", "hotel" and "holiday", if a search request "inn hotel holiday" has been received. In this example, the tokens may be separated for identifying by using spaces. These tokens may be added to the token list 110.

In one modification, the token list 110 may be a full text search list, to which all identified tokens are added.

In a next step, a category mapping 112 is executed, wherein a category mapping strategy is applied deciding, which tokens can be mapped to a respective category. According to the category mapping strategy it is tried to match single tokens to a category. Tokens that match a category may be removed from the token list 110 or at least marked and their respective mapping information are added to a category search list 113. If the token list 110 is a full text search list, the tokens are removed or deleted, respectively, and added to a category search list 113.

For example, the identified tokens "inn", "hotel" and "holiday" listed in the token list 110 may be compared with a plurality of categories. When comparing the token "hotel" to the category "hotels" the category mapping strategy defines to match the token "hotel" to the category "hotels". In this example, the tokens "inn" and "holiday" may not match any category compared with. Accordingly, the token "hotel" is removed from the token list 110 and the tokens "inn" and "holiday" remain in the token list or the full text search list, respectively.

If tokens are left in the token list 110 or the full text search list, respectively, the category mapping strategy preferably tries to map multiple tokens at once to categories. If multiple tokens match a specific category, they are removed from the token list 110 and their respective mapping information are added to the category search list 113.

For example, the tokens "inn" and "holiday" may not match any category, if separately compared with a plurality of categories. However, if the tokens "inn" and "holiday" are concatenated, a combined token "inn holiday" or "holiday inn" can be matched to the category "hotels". Furthermore, a combined token "inn holiday" or "holiday inn" may be matched to a category "holiday inn". Accordingly, the tokens "inn" and "holiday" can be removed from the token list 110 to order to be insert into the category search list 113. Consequently, the token list 110 or the full text search list, respectively, is empty.

Furthermore, in this example the token "hotel" and the combined token "holiday inn" are related to the identical category. However, the combined token may be even more specifically definably by its mapping information than the token "hotel". Therefore, it may be determined by the category mapping strategy, if two tokens match the same category, however one of these two tokens can be defined more specifically within a specific category, than this one token may be related to a mapping information that identifies the more specific category or more specific category information, respectively. In a further search processing, such more specific category information may be processed preferentially.

In a further example, a search request "restaurant lion" has been identified tokens "restaurant" and "lion". The token "restaurant" has been matched to the category "restaurant" and the token "lion" is listed in the full text search list. The category search list 113 comprises an entry including the mapping information of the category "restaurant". The full text search list 110 comprises an entry including the token "lion".

According to a search strategy, it is decided whether a full text search 118or a category search 114 takes place. In one case it may decided that, if the category search list 113 contains at least one mapping information listed as one entry, a category search 114 is performed for this first entry of the category search list 113. The respective category is marked or removed from the category search list 113. Furthermore, if the category search list 113 is empty, a full text search 118 is performed for the first entry of the token list 110 as full text search list.

Based on remaining search criteria, such as entries in the category search list and/or the full text search list, the search result may be filtered 116, 120.

According to one search strategy, for each remaining entry in the category search list 113, a search result filtering is applied that selects results from the search performed, so far, if the individual search results match the respective category. For each remaining entry in the full text search list, a search result filter is applied that selects results from the search performed, so far, if the individual search results match the respective full text search token. The defined results after filtering are delivered back to the user. Furthermore, it may also be possible to search for opening hours by filtering search results in view of opening hours.

In particular, the category search may include a search strategy taking into account the following rules.
- All tokens that match a category or a category definition are used for category search. In some cases multiple tokens may match one category, for example the search request "hotel or motel" includes the tokens "hotel" and "motel" both may match the category "hotels", then the mapping information is only once added to the category search list.
- In case no category is specified or can be determined, a full text search is executed using the identified tokens separately and/or in combination.
- In case a category is specified or determined, a category search is executed.
- In case multiple categories are specified or determined, a category search is executed, whereby only results are collected which match all categories. In other words, an AND operation is executed in respect to the entries of the category search list.
- In case further search term(s) are determined that do not match any category definition, the category search is combined with a full text search, wherein the search results of the category search may be filtered.

In particular, the full text search may include a search strategy taking into account the following rules.
- All tokens that do not match a category name are used for a full text search.
- Each token is searched for in the title field - in case all tokens are matched in the title, the result is collected by an AND operation.

In the following various examples are provided of possible searches:
a) no category, 1 full text word
   Search string: "foo"
   searches in database all entries that have the string "foo" in their title; Full text search: "foo"
   results, for example: "foo bar", "foobar", "football", "barfoo","barfoot" ...
b) 1 category, 1 full text word
   Search string: "hotel foo"
   searches in database all entries with category tag "hotel", but only collects
   entries that have the string "foo" in their title;
   Categories: "hotel"
   Full text search: "foo"
   results, for example: "foo bar", "foobar", "barfoo","barfoot" ... - assuming all are hotels
c) 1 category, 2 full text words
   Search string: "hotel foo inn"
   searches in database all entries with category tag "hotel", but only collects entries that have the string "foo" AND "inn" in their title Categories: hotel
   Full text search: "foo" AND "inn"
   results, for example: "foo inn", "foobar innercity", "barfoot innhouse" ... - assuming all are hotels
d) 2 full text words, 1 category
   Search string: "foo inn hotel"
   Categories: hotel
   Full text search: "holiday" AND "inn"
   results, for example: "foo inn", "foobar innercity", "barfoot innhouse" ... - assuming all are hotels
e) 2 categories, 1 full text word
   Search string: "hotel bar foo"
   Categories: "hotel" AND "bar"
   Full text search: "foo"
   results, for example: "foo bar", "foobar", "football", "barfoo","barfoot" ...-assuming all are hotels and bars

Also, when entering an search string alternately, the search result may be identical, as shown in the example below.
Search string: "restaurant mcdonalds"
   Categories: "restaurant"
   Full text search: "mcdonalds"
   results: all "McDonald's"
Search string: "restaurant mc donalds"
   Categories: "restaurant"
   Full text search: "mc" AND "donalds"
   results: all "McDonald's"
Search string: "restaurant mc donald"
   Categories: "restaurant"
   Full text search: "mc" AND "donald"
   results: all "McDonald's"

The data structure for a category search may include a data file and three indices, index, meta-index and meta-meta-index. The data file may be shared with full-text search. The data file may have one entry per POI. Each entry may comprise a geographical information, such as longitude and latitude, a list of categories to which it belongs, a search text and additional textual information, where both may be searchable content.

An index file may have one entry per POI and to each category the POI belongs to. Each entry may comprise a reference to the POI in the data file. The data structure used for a for full text search may include a data file and two indices, suffix and meta-text. The data file may be shared with the data file of the category search.

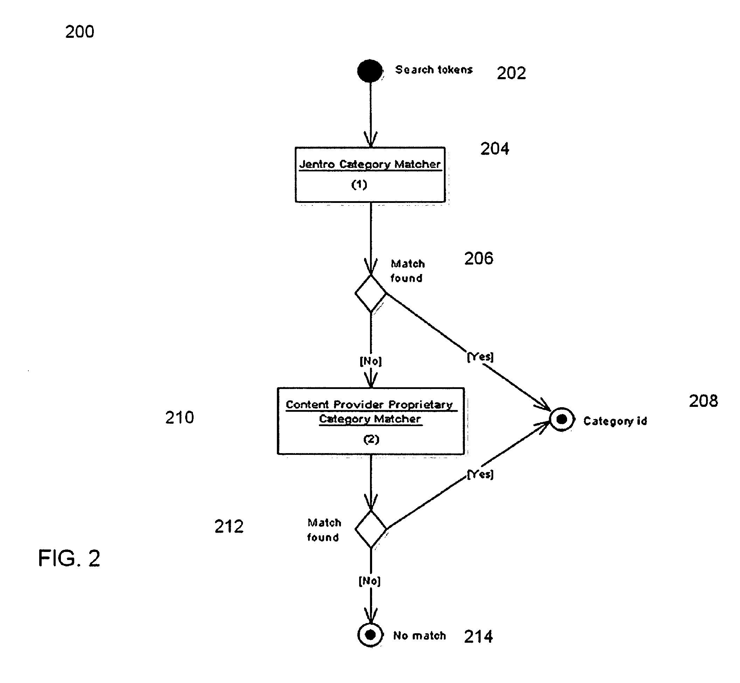

**Figure 2** shows an exemplary computer-implemented method for matching categories 200. This method may be implemented into the method described herein previously.

The method for matching may include providing a category matcher 204 as a primary category matching list and a content provider proprietary category matcher 210 as a secondary category matching list. If a search request includes at least one token, this token is used as a search token 202. This search token 202 is then compared to the a plurality of categories, which may be defined in the primary category matching list as well as the secondary category matching list. However, if the category matcher 204 does not provide a category, which the search token 202 matches, the search token 202 may be compared with the categories defined in the content provider proprietary category matcher 210.

In other words, once a token list has been generated by some tokenization of a search request, these tokens being search tokens 202, which may be submitted to a category matcher 204. The category matcher 204 tries to match the search tokens 202 against a distinguished set of categories specified by a data provider and/or defined in a database, making use of a category matching algorithm. The method may determine whether a category id 208 could be found through a query match found 206, then the respective category id 208 may be returned.

If the category matcher 204 can successfully map onto a category, it returns a respective category id 208, which may be a respective mapping information and the mapping is finished.

If the category matcher 204 cannot map the search tokens 202, it submits the search tokens 202 to a content provider proprietary category matcher 210. The content provider proprietary category matcher 210 may be special to the actual content of the search application and its provider. It may have special information about the categories proprietary to the respective content provider of the data. For example, DasÖrtliche, which is a German directory may include a special set of categories, special to DasÖrtliche.

If the content provider proprietary category matcher 210 can successfully map onto a category, it returns the respective category id 208 and the mapping is finished . The method may determine whether a category id 208 could be found through a further query match found 212, then the respective category id 208 may be returned.

If the content provider proprietary category matcher 210 cannot map all search tokens 202, then the method may output no match 214 and the respective tokens will be used for a full text search.

Such a content provider proprietary category matcher 210 may be helpful, since searchable items or POI may by stored in different databases and/or may have different data format and/or categories related. Also, a database may be based on data provided by several data provider. Furthermore, by using the method different databases may be used comprising different kinds of raw data and/or the data have been differently preprocessed or conditioned, respectively.

Furthermore, the user may be able to define categories and add such categories to either the category matcher 204 or content provider proprietary category matcher 210. Furthermore, recognition of frequent brand names may be possible to build new categories, which may be added to one of the category matching lists. Preferably the adding into one of the category matching lists may take place automatically, if a determined number of search requests includes the respective brand name.

For example, a defined category may be "holiday inn", which includes the hotels named holiday inn.

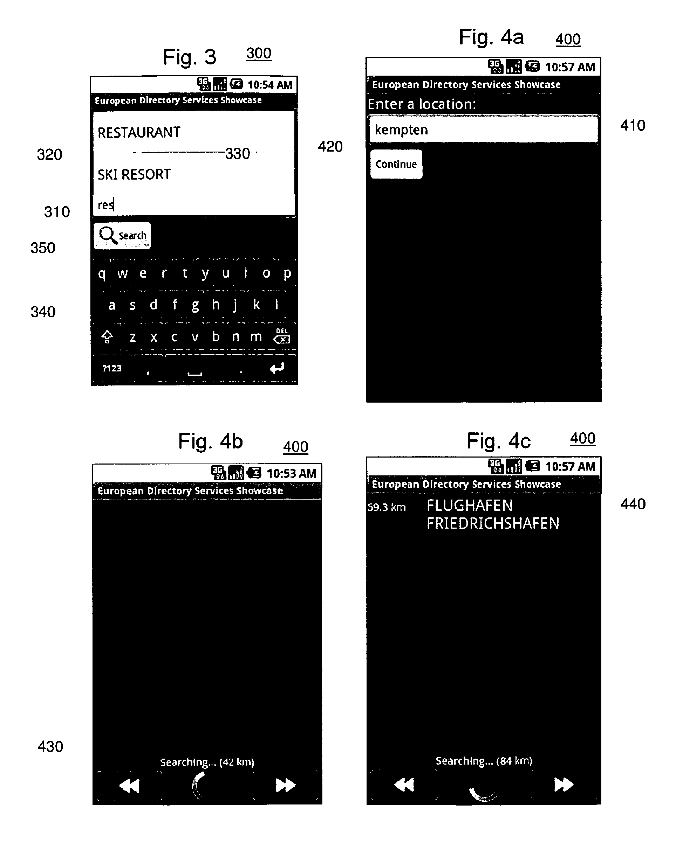

**Figures 3 to 6** show application examples based on screen-shots of an exemplary computer-implemented method on an electronic device.

**Figure 3** shows in general an exemplary display 300 or graphical user interface (GUI) of a device being able to execute the previous described method, wherein it can be seen that a type-ahead functionality is executed. The API 300 includes a single search input field 310 as single free text field, wherein a search request can be entered by a user through a user input means 340 such as an onscreen keyboard 340 on a touch screen. The user input means 340 may also be or comprise an onscreen keyboard, an ordinary keyboard and/or a voice entry or recognition unit. By inputting a request (such as a text input) into the single search input field 310, the user can submit a search request including tokens for a full text search and a category search or a combined search of full text search and category search, respectively. Such a "Type-ahead" functionality might be additionally offered by the search engine used in the said device, in order to enhance the user experience by proposing intelligent completion in an proposal output field 320 of partial entries the user makes via the interface. Furthermore, figure 3 shows exemplary type-ahead proposals 330 offered by the search engine and displayed in the proposal output field 320.

In an example, the user would like to find a restaurant within the near of his current position. The user starts to enter "restaurant" as search request into the search input field 310 via the user input means 340, wherein particularly the user has to enter the search request solely in the search input field 310 without indication of any specific categories and/or additional search criteria. Since only the search input field 310 particularly is activated for receiving entries, a search request can be entered by a user without having to take care whether the correct input field is activated. Therefore, the user has not to organize his search approach. After having entered a partial user entry "res", immediately the search engine searches for results the user may intend to enter in view of providing the type-ahead functionality. Accordingly, as it can be seen from figure 3, for the partial user entry "res" the search engine offers both "Restaurant" and "Ski Resort" as possible choices.

A specific type-ahead proposal may be a search term being a token, which matches a category, or a search term being a token classified as full text search token. The number of type-ahead proposals may vary dependent on the actual partial user entry.

As shown in figure 3, two type-ahead proposals 330 are provided by the search engine and displayed in the proposal output field 320. The user has any time the option either to continue to enter a search request by using the search input means 340 or to choose one or more of the proposed type-ahead proposals 330 displayed to him in the proposal output field 320. The search engine may start to further process a search, when the user activates a search button 350.

The type-ahead functionality may be provided in order to support quick search term entry, wherein an API and a directory provider specific list for a "type ahead" function may support the type-ahead functionality. For example, when entering "res" for "restaurant" a list with "rest area", "restaurant", "public restrooms" or "ski resorts" may also be offered.

In view of having an optimized method of providing search results, as described previously, it may be further advantageous to be able to find points of interest (POI) in a specific area faster.

Accordingly, the search result provided by the previous described method may also include search results related to a location, such as a specific geographic position of an user. Furthermore, the search results provided depend on a category, which has been determined during the processing of the search request.

Therefore, when a search is executed it may be centered on the specified geocode, such as geographical information, namely longitude and latitude. All search results may be sorted by distance (nearest to farthest) and include the distance in km (or miles) from a specific geographical starting position, such as a current user position.

For purposes of user-friendliness, an API may allow specifying a maximum number of results I displayed on one screen, if more than one result is found such as n screens with m results each (I=n*m), e.g. I=48 entries for a PND, showing n=8 screens with m=6 results each. Further, the API may allow specifying a maximum diameter or distance to the search from the local position obtained e.g. by a GPS signal, e.g. 50 km. Such a default maximum diameter can be overwritten or defined particularly on a per category basis, e.g. searching for an airport can be configured with a maximum or starting diameter of 100 km, since airports are usually farther away and users accept the greater distance. Further, the API may contain a "continue" function to be operable by the respective continue button 320, which may allow the user to enlarge or extend the diameter by e.g. 50 km. By default, a search engine may perform a search up to a specified maximum search radius, for example 50 kilometers. The user, however, might be enabled to increase the search radius by using the "Continue" functionality. In other words, a default diameter or distance, which may be generally defined or defined on a category basis, is being searched, at first. Preferably, the search is performed in such a way that matches closer to the specific location are searched/found first and particularly progressively displayed on the display. Once the maximum number I of results or the maximum distance to the search is reached, the search is stopped. In case the user triggers the "continue" function e.g. by pressing the respective continue button 320 the search is continued and the list is extended beyond the maximum number I of results and/or beyond the maximum distance to the search (e.g. by increasing the maximum distance by a default distance every time the continue button 320 is operated or by enlarging the distance to the double upon operating once the continue button 320, to three times by operating the continue button 320 twice, etc.).

For example, if a search is executed, found results may be immediately reported to a user at the time found. Even, if the maximum default search radius has not been reached yet, but a current search radius or a search radius, respectively, is still increasing. Also, in cases where m=6+f, wherein f indicates further results, a first screen may be displayed and a number of immediately reported results may increase up to a number of m=6 on the first screen, while the search radius is still increasing. If a further result (f=1) may be reported, a "next" button may be enabled and the user may be able to activate the "NEXT" button to view further results on a second screen.

**Figures 4a to 4d** shows in general a display 400 of a device, wherein a search is being processed. If a user wants to find a location the user may enter a location or an current location of the user may be automatically determined and used in the further processing. In the example shown in the figures 4a to 4d, as location the city Kempten has been entered by a user, which is displayed in an location input field 410. The search request for this exemplary search has included the token "airport", which as been mapped to the category "airport". The user can start the further processing of his search, when activating a "Continue" button 420.

In general, depending on the categories recognized by an logic of category matching logic or category mapping, respectively, searches may be performed by a search engine with different search areas, such as a default search radii. Therefore, if for example a search for the category "airport" was recognized, the search engine might look in a radius of 100 kilometers instead of a default radius of 50 kilometers. Consequently, a search radius or a respective search area may depend on the category, which the respective token has been matched.

Further, it may be that in either case a user of the search engine may still override the default search radius by using an appropriate request. Also, the search area or search radius may be widened any time by a user of the search engine after a search has taken place.

Referring to figure 4a, showing a search request for "airport", which is to be performed to find an airport near Kempten. Figures 4b to 4c showing the search in progress.

Figure 4b shows a screen shot of the processed search, wherein the current distance or the search area, in which the search engine has already sift for search results (POI) is displayed for user. These status of the current sifted search area is shown by a searching progress indicator 430.

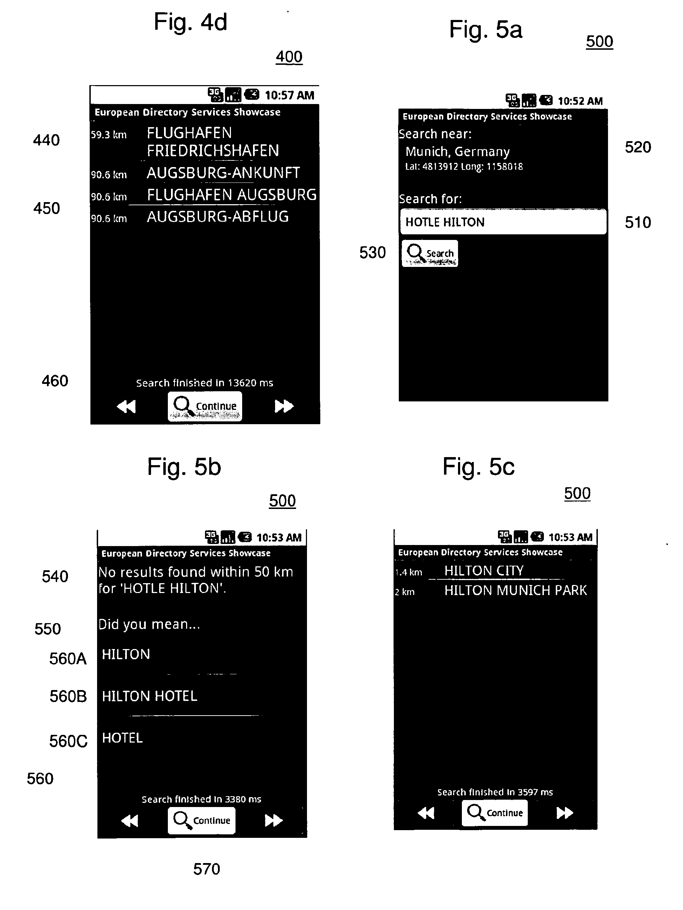

Figure 4c and 4d show that no results have been found in the vicinity of Kempten, which would be in this example an distance less than or up to 50 km. Also, figure 4c shows that even the search is not finished, and the search distance or search radius is still increasing, a first search result 440, namely Flughafen Friedrichshafen, is already reported. In other words, search results, such as the first search result 440, can be reported, even while the search is executed. As shown in figure 4d as final results for an "airport" near to Kempten the airports of Friedrichshafen and Augsburg in distances of 59.3 km and 90.6 km have been found. Accordingly, since in a distance of 50 km no airport exists and, therefore, no search result could have been reported, the search radius has been widened automatically.

Furthermore, it can also be seen in figure 4d that more than one result can be provided for one search result 450 reported. This may be the case, if a travelling route may depend on a specific users' choice of such a result. Also, in case a user requested through specific setting that varying results for one search result should be displayed.

After all search results have been reported to the user, the user has the possibility to request further search result(s) related to an enlarged search area by activating a Continue" button 460.

Referring to **figures 5a to 5c**, these figures illustrating a case, wherein a user has accidentally entered "Hotle Hilton" as search request, while the location to be searched is Munich. The search request has been entered into the single free text field 510 as shown on a display 500. The location has been determined by a user in a previous step, wherein a location information 520 displays the location the search will be adjusted to. In this case the word "Hotle" is a typical misspelling of "Hotel", if the user does not recognize the misspelling and activates a search button 530. Since the search engine may be unable to come up with results for "Hotle Hilton", a fuzzy logic may be used, in order to propose more meaningful search terms, as shown in figure 5b.

As shown in figure 5b, the user receives a "no result" information 540 that no results could be found within 50 km for the search request "hotle hilton". In addition, the user is provided with a list of alternative search terms 560. To point the users' attention to the possible misspelling it is displayed a "Did you mean..." notice 550. It is preferred that the search engine does not automatically correct the misspelled search request and provide the search results for such corrected search request, but rather provides a "no result" information 540 and displays a "Did you mean..." notice 550 proposing the presumably correct spelling.

As can be seen, the search engine provides three alternative search proposals 560A, 560B, 560C as alternative search terms 560. In this example, the alternative search proposal 560A, namely HILTON, is a token classified as full text search token. The alternative search proposal 560C, namely HOTEL HILTON; is a token, which matches the category "hotel". The alternative search proposal 560B is a token including a full text search token as well as token matching a category.

If the user for example now chooses "Hilton Hotel" as substitute search term or search request, the user can be supplied with reasonable search results, as shown in figure 5c.

In case the user is of the opinion that no misspelling is present, the user has also the option to enlarge the search area by activating a continue button 570. Then the search engine may search for possible search results lying in a broader distance of e.g. 100 km, if the default search distance has been e.g. 50 km.

Where users often misspell search terms, many search applications respond in this case with "no results found". However, this is not very helpful for the user. Google, for example, in most cases responds with results, even if the user has misspelled the search term(s). However, when the search method is executed on a PND, which has limited display capabilities, it may be difficult for a user in view of managing and/or cognition of search results. Therefore, an API may be supported, which suggests other search term(s) in this case. One aspect of the fuzzy logic feature may be to split multiple keywords into multiple search requests:
a) Search string: "foo moon"
   Categories: -
   Full text search: "foo" AND "moon"
   Did you mean:
   i) Search string: "foo" - Categories: -, Full text search: "foo"
   ii) Search string: "moon" - Categories: -, Full text search: "moon"
b) Search string: "restaurant foo moon"
   Categories: "restaurant"
   Full text search: "foo" AND "moon"

Did you mean:
i) Search string: "restaurant foo" - Categories: "restaurant", Full text search: "foo"
ii) Search string: "restaurant moon" - Categories: "restaurant", Full text search: "moon"
c) Search string: "restaurant bar foo"
   Categories: "restaurant" AND "bar"
   Full text search: "foo"

Did you mean:
i) Search string: "restaurant foo" - Categories: "restaurant", Full text search: "foo"
ii) Search string: "bar foo" - Categories: "bar", Full text search: "foo"

Another aspect of the fuzzy logic feature may be to find similar words that would match:
a) "hotl", "hotle", "hottel" and "otel" would suggest "hotel"
b) "restauran", "resturant", "restaur" and "restrant" would suggest "restaurant"

This fuzzy logic feature and/or application may be applicable to support any token, which may be a token matching a category and/or full text search token. In particularly, the fuzzy logic feature may support category names. In order not to list useless terms and combinations, the fuzzy logic feature enables probing and qualifying the alternatives before actually suggesting them.

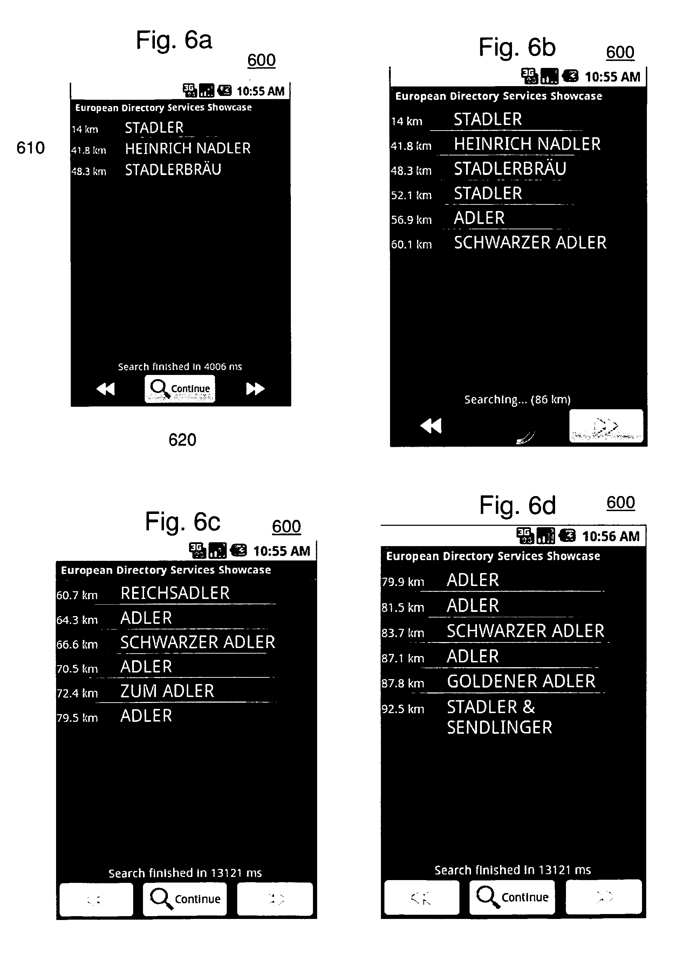

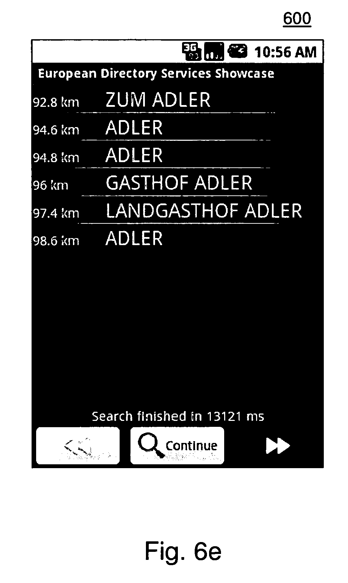

Referring now to figures **6a to 6e****,** it is showed a performed search for a full text keyword "Adler" using Munich as search center. As shown in figure 6a, a search engine found three search results 610 within a default search radius of 50 km. By pressing a "Continue" button 620, the search radius could be increased, in this particular case to 100 kilometers. Figure 6b to 6e show additional search results found within an increased search radius of 100 km.

Therefore, in comparison with known methods an optimized search may be executed. The advantage of the present method described previously, also with respect to the description of figures 1 to 6, is that an arbitrary search string may be entered and a combined category and full text search may be executed.

Since a category search may be comparable in view of quantity and quality of search results as well as the speed of reporting search results, a full text search might be slower in view of the reporting speed. In particular, known methods are not able to provide search results during the search of results. A combined search of category search and full text search with known methods requires an specific order of search keywords or search tokens. Exemplary, the search request "hotel europa" would have to be splitted into "hotel" and "europa", wherein a user has to enter the search keyword "hotel" as category keyword first and can then filter the search result for "hotel" with the keyword "europa". On the other hand these known method can frequently solely provide search results in a small search diameter, such as 1.5 km in larger cities around a geographical starting position, if based on a combined search.

According to the method described above, a required file space is on average approximately 52 bytes per entry (49 MB per 1 million entries), whereby each entry may contain title, street address, phone number, geographical information, and/or category tags. The exact required file space may depend on an actual content stored and/or managed.

For example, required file space
for the directory DasÖrtliche (Germany): approx. 250 MB;
for the directories D/A/CH (Germany DasÖrtliche, Austria Herold, Switzerland search.ch): approx. 290 MB; and
for the directories of U.K. (Yell) and Ireland (Truvo): approx. 155 MB.

With reference to the detailed description of **figures 1 to 6** as well as the introductory description. It is to understand that the search strategy may provide the possibility that through a generic interface, which may decide on how to process search requests. A category mapping strategy provides the possibility that a generic interface that maps (parts of) search tokens to (internal) categories. A category search may provide the possibility that an (internal) implementation of search strategy that selects results based on distance and whether or not they match a specified category. Furthermore, an (internal) implementation of search strategy is provided that selects results based on distance and whether or not they match a specified full text. By a meta search, a search engine combines functionalities of both category and full text search, using the search strategy to decide which search type to apply. The search engine may include the set of meta search, full text search, category search, category mapping strategy and search strategy.

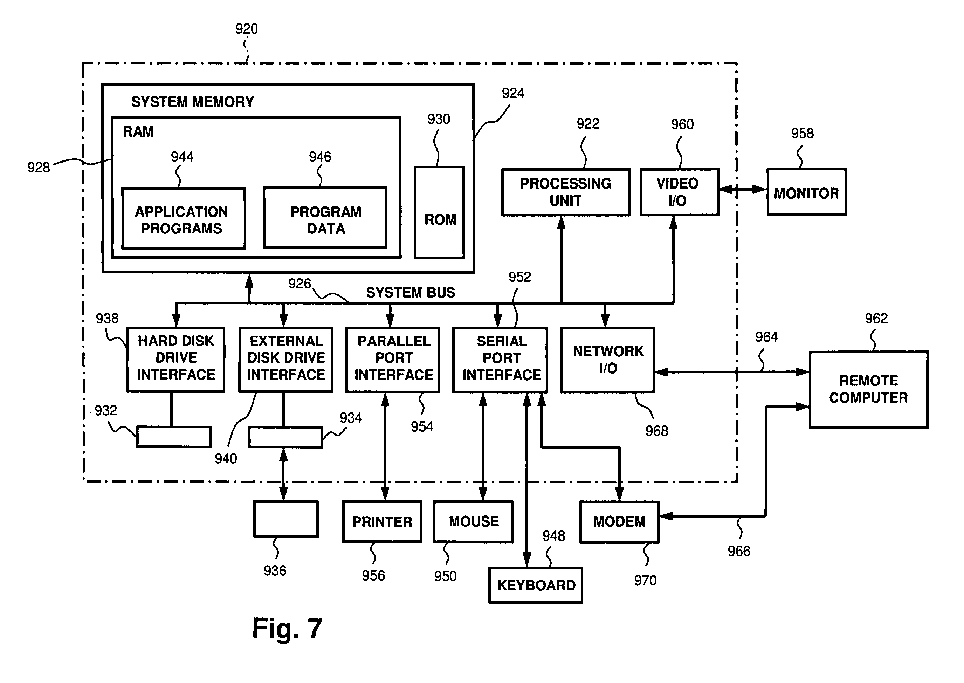

**Figure 7** shows an exemplary system for implementing the invention including a general purpose computing device in the form of a conventional computing environment 920 (e.g. a personal computer). The conventional computing environment includes a processing unit 922, a system memory 924, and a system bus 926. The system bus couples various system components including the system memory 924 to the processing unit 922. The processing unit 922 may perform arithmetic, logic and/or control operations by accessing the system memory 924. The system memory 924 may store information and/or instructions for use in combination with the processing unit 922. The system memory 924 may include volatile and nonvolatile memory, such as a random access memory (RAM) 928 and a read only memory (ROM) 930. A basic input/output system (BIOS) containing the basic routines that helps to transfer information between elements within the personal computer 920, such as during start-up, may be stored in the ROM 930. The system bus 926 may be any of several types of bus structures including a memory bus or memory controller, a peripheral bus, and a local bus using any of a variety of bus architectures.

The personal computer 920 may further include a hard disk drive 932 for reading from and writing to a hard disk (not shown), and an external disk drive 934 for reading from or writing to a removable disk 936. The removable disk may be a magnetic disk for a magnetic disk driver or an optical disk such as a CD ROM for an optical disk drive. The hard disk drive 932 and the external disk drive 934 are connected to the system bus 926 by a hard disk drive interface 938 and an external disk drive interface 940, respectively. The drives and their associated computer-readable media provide nonvolatile storage of computer readable instructions, data structures, program modules and other data for the personal computer 920. The data structures may include relevant data for the implementation of the method for processing search requests or for searching data, as described above. The relevant data may be organized in a database, for example a relational or object database.

Although the exemplary environment described herein employs a hard disk (not shown) and an external disk 936, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 936, ROM 930 or RAM 928, including an operating system (not shown), one or more application programs 944, other program modules (not shown), and program data 946. The application programs may include at least a part of the functionality as depicted in Figs. 1 to 6.

A user may enter commands and information, as discussed below, into the personal computer 920 through input devices such as keyboard 948 and mouse 950. Other input devices (not shown) may include a microphone (or other sensors), joystick, game pad, scanner, or the like. These and other input devices may be connected to the processing unit 922 through a serial port interface 952 that is coupled to the system bus 926, or may be collected by other interfaces, such as a parallel port interface 954, game port or a universal serial bus (USB). Further, information may be printed using printer 956. The printer 956, and other parallel input/output devices may be connected to the processing unit 922 through parallel port interface 954. A monitor 958 or other type of display device is also connected to the system bus 926 via an interface, such as a video input/output 960. In addition to the monitor, computing environment 920 may include other peripheral output devices (not shown), such as speakers or other audible output.

The computing environment 920 may communicate with other electronic devices such as a computer, telephone (wired or wireless), personal digital assistant, television, or the like. To communicate, the computer environment 920 may operate in a networked environment using connections to one or more electronic devices. **Figure 7** depicts the computer environment networked with remote computer 962. The remote computer 962 may be another computing environment such as a server, a router, a network PC, a peer device or other common network node, and may include many or all of the elements described above relative to the computing environment 920. The logical connections depicted in **Figure 7** include a local area network (LAN) 964 and a wide area network (WAN) 966. Such networking environments are commonplace in offices, enterprise-wide computer networks, intranets and the Internet and may particularly be encrypted.

When used in a LAN networking environment, the computing environment 920 may be connected to the LAN 964 through a network I/O 968. When used in a WAN networking environment, the computing environment 920 may include a modem 970 or other means for establishing communications over the WAN 966. The modem 970, which may be internal or external to computing environment 920, is connected to the system bus 926 via the serial port interface 952. In a networked environment, program modules depicted relative to the computing environment 920, or portions thereof, may be stored in a remote memory storage device resident on or accessible to remote computer 962. Furthermore other data relevant to the method for processing search request (described above) may be resident on or accessible via the remote computer 962. It will be appreciated that the network connections shown are exemplary and other means of establishing a communications link between the electronic devices may be used.

The above-described computing system is only one example of the type of computing system that may be used to implement the method for processing search requests.

### List of Reference Numerals

- 100: computer-implemented method
- 102: search request
- 106: search request tokenising
- 108: empty result
- 110: token list
- 112: category mapping
- 114: category search
- 116: category filtering
- 118: full text search
- 120: full text filtering
- 122: search result
- 200: method for matching categories
- 202: search tokens
- 204: category matcher
- 208: category id
- 210: content provider proprietary category matcher
- 300: display; API
- 310: single search input field
- 320: proposal output field
- 330: type-ahead output field
- 340: user input means
- 350: search button
- 400: display
- 410: location input field
- 420: continue button
- 430: searching progress indicator
- 440: first search result
- 500: display
- 510: single free text field
- 520: location information
- 530: search button
- 540: "no result" information
- 550: "Did you mean" notice
- 560: alternative search terms
- 560A-C: alternative search proposals
- 570: continue button
- 920: conventional computing environment
- 922: processing unit
- 924: system memory
- 926: system bus
- 928: random access memory (RAM)
- 930: read only memory (ROM)
- 932: hard disk drive
- 934: external disk drive
- 936: removable disk
- 938: hard disk drive interface
- 940: external disk drive interface
- 944: one or more application programs
- 946: program data
- 948: keyboard
- 950: mouse
- 952: serial port interface
- 954: parallel port interface
- 956: printer
- 958: monitor
- 960: video input/output
- 962: remote computer
- 964: local area network (LAN)
- 966: wide area network (WAN)
- 968: network I/O
- 970: a modem

## Claims

1. Computer-implemented method (100) for searching data, the method comprising:
- providing a database specifying a plurality of items each of which having at least one category and additional content being assigned thereto;
- receiving a search request (102);
- identifying one or more tokens included in the search request (102);
- comparing at least one identified token with a plurality of categories defined in the database;
- mapping (112) the at least one identified token to at least one category, if the at least one identified token matches the at least one category;
- classifying the at least one identified token as a full text search (118) token for comparison to the additional content, if the token does not match any category; and
- determining (114 - 116) a category search result identifying one or more items having the at least one category assigned thereto in the database, if the identified token matches the at least one category and/or
- determining a full text search result identifying one or more items having the token contained in the additional content in the database, if the token does not match any category.

2. Computer-implemented method (100) according to claim 1, further comprising providing an interface including a single free text field (310) and/or a voice input unit for a user to enter the search request (102).

3. Computer-implemented method (100) according to any one of claim 1 or 2, wherein identifying the at least one token includes tokenising (106) the search request (102) into one or more tokens by using delimiters, when the search request (102) includes more than one term.

4. Computer-implemented method (100) according to any one of claims 1 to 3,
wherein identifying the one or more tokens includes adding the one or more identified token to a token list (110); and
wherein mapping (112) includes
-- adding respective mapping information that identifies the respective category to a category search list (113), and
-- removing the token matching the at least one category from the token list (110).

5. Computer-implemented method (100) according to any one of claims 1 to 4, wherein
comparing includes
-- concatenating at least two identified tokens to a combined token,
and
-- comparing the combined token with a plurality of categories defined in the database; and
wherein mapping (112) includes mapping the at least one combined token to at least one category, if the at least one combined token matches the at least one category; and wherein
each of the at least two identified tokens of the combined token is classified as full text search (118) token for comparison to the additional content, if the combined token does not match any category.

6. Computer-implemented method (100) according to any one of claims 1 to 5, wherein
mapping (112) includes adding first and second mapping information to a category search list (113), wherein the first mapping information identify a first category and the second mapping information identify a second category, and
wherein determining (114 - 116) the category search result comprises
determining (114) an intermediate category search result identifying items having the first category assigned thereto in the database and
determining (116) the category search result identifying items identified in the intermediate category result list and having the second category assigned thereto in the database.

7. Computer-implemented method (100) according to any one of claims 1 to 6 further comprising
determining (118 - 120) a full text search result identifying items having additional content assigned thereto in the database, such that the additional content matches the full text search (118) token.

8. Computer-implemented method (100) according to claims 1 to 7, further comprising
providing geographical information assigned to each item; and
defining a search area (410, 520);
wherein determining (122, 114 - 116, 118 - 120) a category search result and/or determining a full text search result is performed dependent on the defined search area (410, 520), so that each of the identified items has geographical information assigned thereto, which define a respective geographical position within the search area (400, 500, 600).

9. Computer-implemented method (100) according to claim 8, further comprising receiving a user input for requesting a continued search (620);
defining an enlarged search area (600); and
determining (600) an enlarged category search result and/or determining an enlarged full text search result dependent on the defined enlarged search area, so that each of the identified items has geographical information assigned thereto, which define a respective geographical position within the enlarged search area.

10. Computer-implemented method (100) according to claims 8 or 9, wherein determining (114 - 116) a category search result comprises
defining a local search region within the search area; and
determining a preliminary category search result identifying items having the at least one category assigned thereto in the database and having geographical information assigned thereto, which define a geographical position within the local search region; and/or
wherein determining (118 - 120) a full text search result comprises
defining a local search region within the search area; and
determining a preliminary full text search result identifying items having additional content assigned thereto in the database, such that the additional content matches the full text search token, and having geographical information assigned thereto, which define a geographical position within the local search region.

11. Computer-implemented method according to any one of claims 9 to 10, wherein
defining the search area and/or the enlarged search area depend on the at least one category, which the at least one token matches.

12. Computer-implemented method (100) according to any one of claims 1 to 11 comprising
providing a primary category matching list and a secondary category matching list;
wherein comparing the at least on identified token with a plurality of categories includes
comparing the at least on identified token with a plurality of categories defined in the primary category matching list, and
comparing the at least on identified token with a plurality of categories defined in the secondary category matching list, if the identified token does not match at least one category of the primary category matching list.

13. Computer system comprising:
- at least one memory for providing a database specifying/defining a plurality of items each of which having at least one category and additional content being assigned thereto;
- at least one user interface for receiving a search request (102);
- a identification module for identifying one or more tokens included in the search request (102);
- a comparator for comparing at least one identified token with a plurality of categories defined in the database;
- a mapping module for mapping (112) the at least one identified token to at least one category, if the at least one identified token matches the at least one category;
a classification module for classifying the at least one identified token as a full text search (118) token for comparison to the additional content, if the token does not match any category; and
- an evaluation module for determining (114 - 116) a category search result identifying items having the at least one category assigned thereto in the database, if the identified token matches the at least one category, and/or determining a full text search result identifying one or more items having the token contained in the additional content in the database, if the token does not match any category.

14. Computer system according to claim 13, further comprising
at least one search engine for executing a full text search and/or a category search and performing the determined search; and wherein
the system is configured to execute one or more steps of the method (100) defined in any one of claims 2 to 12.

15. Computer program product comprising computer readable instructions, which when loaded into a memory of a data storage system cause at least one processor of the data storage system to execute the steps according to a method (100) of one or more of the claims 1 to 12.
